# EUROPEAN PATENT SPECIFICATION

(11) **EP 3 981 632 B1**
(45) Date of publication and mention of the grant of the patent: **07.06.2023**
(21) Application number: 20200832.2
(22) Date of filing: 08.10.2020
(51) Int. Cl.: B60K 6/48, B60W 20/10, B60W 10/06, B60W 10/08

(54) **METHOD AND SYSTEM FOR CONTROLLING A HYBRID ELECTRIC DRIVELINE**
VERFAHREN UND SYSTEM ZUR STEUERUNG EINES HYBRIDEN ELEKTRISCHEN ANTRIEBSSTRANGS
PROCÉDÉ ET SYSTÈME POUR COMMANDER UNE CHAÎNE CINÉMATIQUE ÉLECTRIQUE HYBRIDE

(43) Date of publication of application: 13.04.2022
(73) Proprietor: Volvo Penta Corporation, 405 08 Göteborg (SE)
(72) Inventor: CARLSSON, Lars-Gunnar, 423 39 Torslanda (SE)
(74) Representative: Zacco Sweden AB

(56) References cited:
- DE-A1-102006 019 031
- DE-A1-102012 009 481
- DE-A1-102013 004 033
- US-A1- 2013 166 130

## Description

### TECHNICAL FIELD

The present invention relates to a method and a system for controlling a hybrid electric driveline when an electric machine is run in a generator mode, and where the electric machine and an internal combustion engine are configured in parallel. The method may be used for a hybrid electric driveline in a vessel or a heavy vehicle.

### BACKGROUND ART

Heavy vehicles comprises an internal combustion engine for the propulsion of the vehicle, and can further be equipped with an electric machine that can act as a generator for charging a battery and as an electric motor for propulsion of the vehicle. It is important that the electric machine can be used as a generator when the charge of the battery is low, especially in a hybrid electric vehicle where the battery is used more often, causing larger charge and discharge cycles for the battery. At the same time, it is important that the internal combustion engine behaves as expected by the driver, e.g. that the vehicle will be able to accelerate when the accelerometer pedal is pressed, requesting more torque from the internal combustion engine.

If the vehicle is running, a certain torque is delivered from the internal combustion engine to drive the wheels of the vehicle. If at the same time the charge of the battery is relatively low, a high charge current will be used to charge the battery, and the electric motor acting as a generator will put an additional load on the internal combustion engine, i.e. will load the internal combustion engine with an additional torque. It may be that the combined load on the internal combustion engine, i.e. the torque used to propel the vehicle and the torque used to charge the battery is equal to the maximal torque that the internal combustion engine can deliver. It may also be that the requested torque to propel the vehicle and the requested torque to charge the battery is higher than the maximal torque that can be delivered by the internal combustion engine. In this case, either the propulsion torque and/or the charging torque must be limited.

The driver may not be aware of such a situation. When the maximal torque of the internal combustion engine is used without the driver requesting maximal torque to propel the vehicle, the driver might want to accelerate and requests more torque by pressing the accelerator pedal. Since the maximal torque of the internal combustion engine is already used, nothing will happen which may surprise the driver. This may also cause a dangerous situation.

DE 102013004033 A1 discloses a drive arrangement and a method for adjusting the torque of an internal combustion engine in a hybrid vehicle comprising an internal combustion engine and an electric machine, where the torque generated by the internal combustion engine is set as a function of a currently available torque of the electric machine.

There is thus room for an improved method to control a hybrid electric driveline of a vehicle.

### DISCLOSURE OF INVENTION

An object of the invention is therefore to provide an improved method to control a hybrid electric driveline. A further object of the invention is to provide a system for controlling a hybrid electric driveline. A further object of the invention is to provide a vehicle comprising such a system. An object is also to provide a computer program and a computer program product adapted to perform the steps of the method.

The solution to the problem according to the invention is described in the characterizing part of claim 1 regarding the method, in claim 9 regarding the system and in claim 10 regarding the vehicle. The other claims contain advantageous further developments of the inventive method and vehicle.

Claims for a computer program and a computer program product are also enclosed.

In a method for controlling a hybrid electric driveline, comprising an internal combustion engine and an electric machine configured in parallel for driving a propulsion member, the steps of: driving the driveline in generator mode, where the electric machine provides an charge current to a battery and where the internal combustion engine provides positive driving torque to the propulsion member, and limiting the maximal available torque from the internal combustion engine to a predetermined torque limitation value depending on the rotational speed of the internal combustion engine are disclosed, where the predetermined torque limitation value is a percentage of the maximal torque of the internal combustion engine depending on the rotational speed of the internal combustion engine.

With these features, the method is able to avoid unsuitable working points for the internal combustion engine and it will also provide an available buffer torque zone for the internal combustion engine in case of requested acceleration. In this way, it will be ensured that the driveline will be able to respond to a requested increase in torque output from the internal combustion engine when required. It will also be possible to avoid specific working points for the internal combustion engine, e.g. to avoid a specific rotational speed of the internal combustion engine at which a resonance may occur. A further advantage is that the life time of the internal combustion engine will increase and that the wear of the internal combustion engine will at the same time decrease, which may also increase the service intervals of the vehicle. This is due to the fact that the maximal torque output of the internal combustion engine will not be used under normal load conditions, even if the battery requires a high load current.

By the method, the torque that may be delivered by the internal combustion engine when the electric machine is charging a battery is limited to a predetermined torque limitation value that is dependent on the rotational speed of the internal combustion engine. The torque limitation value is lower than the maximal torque that can be delivered by the internal combustion engine. In this way, the charge current of the electric machine may be limited in dependency of the torque request to the internal combustion engine. With a torque request to the internal combustion engine that is lower than the torque limitation value, the charge current may be limited to a certain degree, depending on the torque request, such that the total torque delivered by the internal combustion engine does not exceed the torque limitation value. With a torque request to the internal combustion engine that corresponds to the torque limitation value, or that is higher, the charge current is limited to zero, i.e. the battery is not charged at all.

In one example, the charge current to the battery may be increased when the torque request to the internal combustion engine has not changed significantly for a predetermined time interval, i.e. that the predetermined torque limitation value is increased temporarily when a steady state torque request to the internal combustion engine is requested for a predetermined time interval. When a higher torque request is requested, the torque limitation value is reset to the nominal value, and the charge current to the battery is decreased.

The torque limitation value may be selected in different ways. In one example, the torque limitation value is a set percentage of the maximal torque of the internal combustion engine. The percentage may e.g. be between 70-90% of the maximal torque of the internal combustion engine. It is also possible to assign different percentage values for different rotational speed ranges of the internal combustion engine. In one example, the torque limitation value may be 70% for a rotational speed below a first rotational speed value, e.g. below 600 rpm. The torque limitation value may be 90% between the first rotational speed value and a second rotational speed value, e.g. 1600 rpm, and may be 80% for rotational speed values above the second rotational speed value.

The torque limitation value may also be a table depending on the rotational speed value. By using a table to determine the torque limitation value, unfavourable rotational speed values may be avoided completely, e.g. critical rotational speed values at which vibrations or resonances occur.

In a system for controlling a hybrid electric driveline in a vehicle, where the hybrid electric driveline comprises an internal combustion engine and an electric machine configured in parallel for driving a propulsion member, where the system further comprises an electronic control unit, where the electronic control unit controls the hybrid electric driveline to function in a generator mode in which the electric machine delivers a charge current to a battery and where the internal combustion engine provides positive driving torque to the propulsion member, the object of the invention is achieved in that the electronic control unit is adapted to limit the torque delivered by the internal combustion engine to a predetermined torque limitation value in dependence of the rotational speed of the internal combustion engine.

By the inventive system, a system that provides a torque safety margin for an internal combustion engine in a hybrid electric driveline when the electric machine is running as a generator is provided. In this way, a driver will always be able to request an increase in torque from the internal combustion engine when a battery is charged by the electric machine.

### BRIEF DESCRIPTION OF DRAWINGS

The invention will be described in greater detail in the following, with reference to the attached drawings, in which
- Fig. 1: shows a schematic heavy vehicle,
- Fig. 2: shows a schematic vessel,
- Fig. 3: shows a schematic system for controlling a hybrid electric driveline according to the invention,
- Fig. 4: shows a typical torque curve for an internal combustion engine, and
- Fig. 5: shows a schematic flow chart of the inventive method.

### MODES FOR CARRYING OUT THE INVENTION

The embodiments of the invention with further developments described in the following are to be regarded only as examples and are in no way to limit the scope of the protection provided by the patent claims. In this description, the term vehicle is used both for land based vehicles comprising wheels and for vessels or boats.

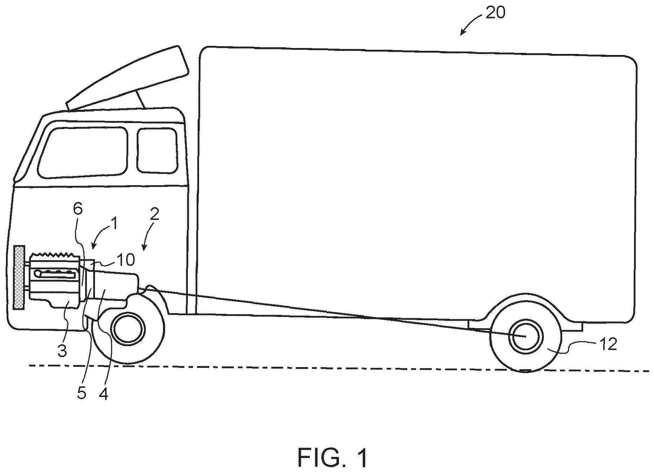

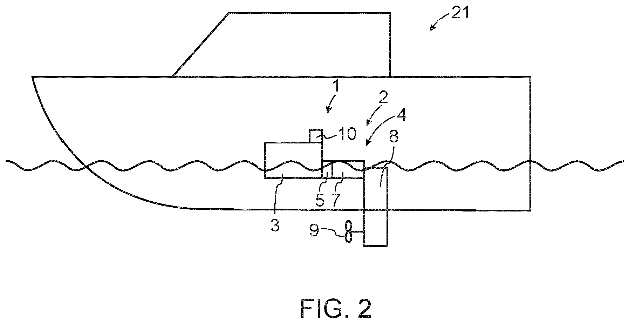

Fig. 1 shows a schematic heavy vehicle 20 provided with an inventive system 1 for controlling a hybrid electric driveline, and Fig. 2 shows a schematic vessel 40 provided with an inventive system 1 for controlling a hybrid electric driveline. The heavy vehicle is here a truck, but the control system can be used in any heavy vehicle comprising a hybrid electric driveline, such as busses or construction equipment vehicles. The control system is further well suited for use in vessels or boats comprising a hybrid electric driveline. The system is primarily intended for boats comprising a double engine arrangement, such as an Inboard Performance System (IPS), but is also well suited for boats or vessels comprising one internal combustion engine.

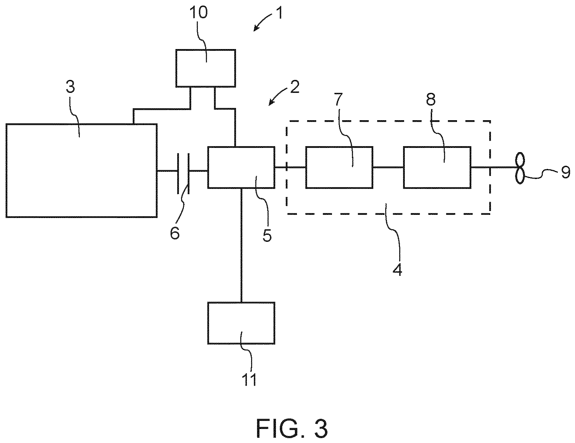

Fig. 3 shows a schematic system 1 for controlling a hybrid electric driveline 2. The system 1 comprises an internal combustion engine 3, a transmission 4, an electric machine 5 and a clutch 6. The transmission is coupled to a propulsion member that propels the vehicle or vessel. In a first example, the hybrid electric driveline is used in a heavy vehicle 20. In this case, the transmission comprises a gearbox and differential that in turn drives the wheels of the vehicle. In a second example, the hybrid electric driveline is used in a boat and the transmission may comprise a reverse gear 7 and a sterndrive 8 that drives a propeller 9.

The electric machine 5 is mounted on a drive axle of the internal combustion engine, downstream of the clutch, and the internal combustion engine and the electric machine are configured as a parallel electric hybrid driveline. The electric machine may be used as an electric motor and can be used to provide additional drive torque for driving the vehicle or can be used alone, such that the driveline is powered only by electricity. The electric machine can further be used as a generator that will charge a battery 11. Depending on the size and state of charge of the battery, more or less charge current may be required.

When the vehicle is driven by the internal combustion engine and the battery needs to be charged, the electric machine will load the internal combustion engine with an additional load, i.e. with an additional torque. Depending on the torque delivered by the internal combustion engine and the required torque required to charge the battery, the combined torque may equal or exceed the maximal torque that can be delivered by the internal combustion engine. In such a situation, there is no safety margin if the driver would request additional torque, e.g. for acceleration. In a vessel using an IPS system, additional torque may be requested by the system for positioning of the vessel or for steering of the vessel. With no additional torque available, the safety of the vessel may be compromised in some driving situations.

In order to provide a safety margin when the electric machine is charging the battery, the maximal torque that the internal combustion engine is allowed to deliver is limited to a torque limitation value. The torque limitation value is a predefined value that is dependent on the rotational speed of the internal combustion engine and that provides a margin to the maximal torque that the internal combustion engine can deliver. The torque limitation value is lower than the maximal torque, and may be e.g. 20% lower than the maximal torque value.

In this way, the requested torque from the internal combustion engine is used to propel the vehicle forwards. The difference between the requested torque and the torque limitation value at a given rotational speed can then be used by the electric machine to charge the battery. If the difference between the requested drive torque to the internal combustion engine and the torque limitation value is larger than the torque needed to charge the battery, the electric machine can charge the battery as needed with the required charge current. If the difference between the requested drive torque to the internal combustion engine and the torque limitation value is smaller than the torque needed to charge the battery, the charge current to the battery is reduced such that the requested drive torque and the torque used by the electric machine equals the torque limitation value.

When a drive torque request to the internal combustion engine is higher than the torque limitation value, the charge current is limited to zero, i.e. the battery is not charged at all. In this way, the torque from the internal combustion engine is used only to propel the vehicle. With the charge current set to zero, the maximal available torque that can be delivered by the internal combustion engine may be used. In this situation, there is no need for a safety margin, and the situation will resemble an ordinary internal combustion engine without a hybrid electric driveline.

If the vehicle is driven at a steady state for a longer time period, the charge current to the battery may be increased when the torque request to the internal combustion engine has not changed significantly for a predetermined time interval, i.e. the predetermined torque limitation value is increased temporarily when a steady state torque request to the internal combustion engine is requested for a predetermined time interval. When a higher torque is requested, the torque limitation value is reset to the nominal value, and the charge current to the battery is decreased.

The torque limitation value may be selected in different ways. In one example, the torque limitation value is a set percentage of the maximal torque of the internal combustion engine. The percentage may e.g. be between 70-90% of the maximal torque of the internal combustion engine. It is also possible to assign different percentage values for different rotational speed ranges of the internal combustion engine. In one example, the torque limitation value may be 70% for a rotational speed below a first rotational speed value, e.g. below 600 rpm. The torque limitation value may be 90% between the first rotational speed value and a second rotational speed value, e.g. 1600 rpm, and may be 80% for rotational speed values above the second rotational speed value.

The torque limitation value may also be a table depending on the rotational speed value. By using a table to determine the torque limitation value, unfavourable rotational speed values may be avoided completely, e.g. critical rotational speed values at which vibrations or resonances occur. This will prevent the internal combustion engine to run at critical rotational speed values and will minimize noise from the internal combustion engine, from the driveline and/or from the vehicle.

The control system 1 is provided with an electronic control unit (ECU) 10 adapted to control the torque output from the internal combustion engine 3 and to control the charge current of the electric machine 5. The ECU 10 will communicate with other ECU's of the vehicle.

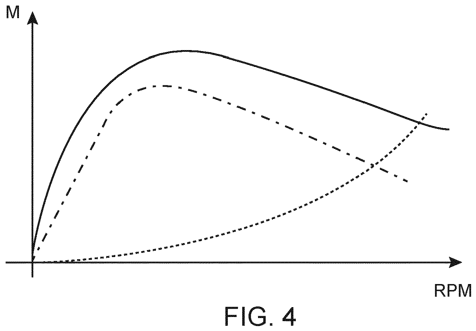

Fig. 4 shows an example of a typical torque curve M for an internal combustion engine depending on the rotational speed RPM of the internal combustion engine, where the solid line is the maximal torque that can be delivered by the internal combustion engine. The dash-dotted line is an example of torque limitation values for different rotational speeds. The dotted line is an example of a propeller torque curve for a vessel. In the shown example, the torque limitation values are determined from a table stored in the ECU 10. The safety margin for different rotational speeds varies, and is here larger for higher rotational speeds.

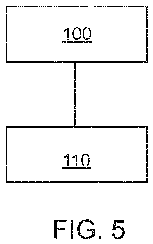

Fig. 5 shows a schematic flow chart of one example of the method for controlling a hybrid electric driveline in a heavy vehicle or a vessel, comprising an internal combustion engine and an electric machine configured in parallel for driving a propulsion member. The method is performed when the internal combustion engine propels the vehicle, and when the electric machine is used to charge a battery.

In step 100, the driveline is driven in generator mode, where the electric machine provides a charge current to a battery and where the internal combustion engine provides positive driving torque to the propulsion member.

In step 110, the maximal available torque from the internal combustion engine is limited to a predetermined torque limitation value depending on the rotational speed of the internal combustion engine.

The invention is not to be regarded as being limited to the embodiments described above, a number of additional variants and modifications being possible within the scope of the subsequent patent claims.

### REFERENCE SIGNS

- 1:: Control system
- 2:: Driveline
- 3:: Internal combustion engine
- 4:: Transmission
- 5:: Electric machine
- 6:: Clutch
- 7:: Reverse gear
- 8:: Sterndrive
- 9:: Propeller
- 10:: Electronic control unit
- 11:: Battery
- 12:: Wheel

- 20:: Vehicle
- 21:: Vessel

## Claims

1. A method for controlling a hybrid electric driveline, comprising an internal combustion engine and an electric machine configured in parallel for driving a propulsion member, comprising the following steps:
- driving the driveline in generator mode, where the electric machine provides a charge current to a battery and where the internal combustion engine provides positive driving torque to the propulsion member,
- limiting the maximal available torque from the internal combustion engine to a predetermined torque limitation value depending on the rotational speed of the internal combustion engine,
- **characterized in that** the predetermined torque limitation value is a percentage of the maximal torque of the internal combustion engine depending on the rotational speed of the internal combustion engine.

2. Method according to claim 1, **characterized in that** the charge current of the electric machine is decreased when the torque request to the internal combustion engine and the required torque to charge the battery is larger than the predetermined torque limitation value.

3. Method according to claim 1, **characterized in that** the charge current of the electric machine is decreased to zero when the torque request to the internal combustion engine and the required torque to charge the battery is larger than the predetermined torque limitation value.

4. Method according to claim 1, **characterized in that** the charge current of the electric machine is decreased to zero when the maximal torque of the internal combustion engine is requested.

5. Method according to any of claims 1 to 3, **characterized in that** the charge current of the electric machine is increased when a steady state torque request during more than a predetermined time is registered.

6. Method according to any of claims 1 to 5, **characterized in that** the percentage is between 70 - 90 % of the maximal torque of the internal combustion engine.

7. Method according to any of claims 1 to 5, **characterized in that** the predetermined torque limitation value is a table depending on the rotational speed of the internal combustion engine.

8. Method according to claim 7, **characterized in that** the predetermined torque limitation table comprises specific torque limitation values for specific rotational speed values of the internal combustion engine.

9. A system for controlling a hybrid electric driveline (2) in a vehicle (20; 21), where the hybrid electric driveline (2) comprises an internal combustion engine (3) and an electric machine (5) configured in parallel for driving a propulsion member (9; 12), where the system further comprises an electronic control unit (10), where the electronic control unit (10) controls the hybrid electric driveline (2) to function in a generator mode in which the electric machine delivers a charge current to a battery (11) and where the internal combustion engine (3) provides positive driving torque to the propulsion member, where the electronic control unit (10) is adapted to limit the torque delivered by the internal combustion engine (3) to a predetermined torque limitation value in dependence of the rotational speed of the internal combustion engine (3), **characterized in that** the predetermined torque limitation value is a percentage of the maximal torque of the internal combustion engine (3) depending on the rotational speed of the internal combustion engine (3).

10. Vehicle, comprising a control system according to claim 9.

11. Vehicle according to claim 10, **characterized in that** the vehicle is a heavy vehicle (20) and the propulsion member is a wheel (12).

12. Vehicle according to claim 10, **characterized in that** the vehicle is a vessel or a boat (21) and the propulsion member is a propeller (9).

13. A computer program comprising program code means for causing the system of claim 9 to perform all the steps of claims 1 - 8 when said program is run on the electronic control unit (10) of the system of claim 9.

14. A computer program product comprising program code means stored on a computer readable medium for causing the system of claim 9 to perform all the steps of claims 1 - 8 when said program product is run on the electronic control unit of the system of claim 9.

## Patentansprüche

1. Verfahren zum Steuern eines hybriden elektrischen Antriebsstrangs, umfassend einen Verbrennungsmotor und eine elektrische Maschine, die parallel konfiguriert sind, um ein Fortbewegungselement anzutreiben, umfassend folgende Schritte:
- Antreiben des Antriebsstrangs im Generatormodus, in dem die elektrische Maschine einen Ladestrom für eine Batterie bereitstellt, und in dem der Verbrennungsmotor ein positives Antriebsdrehmoment für das Fortbewegungselement bereitstellt,
- Begrenzen des maximalen verfügbaren Drehmoments von dem Verbrennungsmotor auf einen vorbestimmten Drehmomentbegrenzungswert, der von der Drehzahl des Verbrennungsmotors abhängig ist,
- **dadurch gekennzeichnet, dass** der vorbestimmte Drehmomentbegrenzungswert ein Prozentsatz des maximalen Drehmoments des Verbrennungsmotors ist, der von der Drehzahl des Verbrennungsmotors abhängig ist.

2. Verfahren nach Anspruch 1, **dadurch gekennzeichnet, dass** der Ladestrom der elektrischen Maschine verringert wird, wenn die Drehmomentanfrage an den Verbrennungsmotor und das erforderliche Drehmoment zum Laden der Batterie größer als der vorbestimmte Drehmomentbegrenzungswert ist.

3. Verfahren nach Anspruch 1, **dadurch gekennzeichnet, dass** der Ladestrom der elektrischen Maschine auf null verringert wird, wenn die Drehmomentanfrage an den Verbrennungsmotor und das erforderliche Drehmoment zum Laden der Batterie größer als der vorbestimmte Drehmomentbegrenzungswert ist.

4. Verfahren nach Anspruch 1, **dadurch gekennzeichnet, dass** der Ladestrom der elektrischen Maschine auf null verringert wird, wenn das maximale Drehmoment des Verbrennungsmotors angefragt wird.

5. Verfahren nach einem der Ansprüche 1 bis 3, **dadurch gekennzeichnet, dass** der Ladestrom der elektrischen Maschine erhöht wird, wenn eine bleibende Drehmomentanfrage während mehr als einem vorbestimmten Zeitraum registriert wird.

6. Verfahren nach einem der Ansprüche 1 bis 5, **dadurch gekennzeichnet, dass** der Prozentsatz zwischen 70 und 90 % des maximalen Drehmoments des Verbrennungsmotors liegt.

7. Verfahren nach einem der Ansprüche 1 bis 5, **dadurch gekennzeichnet, dass** der vorbestimmte Drehmomentbegrenzungswert eine Tabelle ist, die von der Drehzahl des Verbrennungsmotors abhängig ist.

8. Verfahren nach Anspruch 7, **dadurch gekennzeichnet, dass** die vorbestimmte Drehmomentbegrenzungstabelle spezifische Drehmomentbegrenzungswerte für spezifische Drehzahlwerte des Verbrennungsmotors umfasst.

9. System zum Steuern eines hybriden elektrischen Antriebsstrangs (2) in einem Fahrzeug (20; 21), wobei der hybride elektrische Antriebsstrang (2) einen Verbrennungsmotor (3) und eine elektrische Maschine (5) umfasst, die parallel konfiguriert sind, um ein Fortbewegungselement (9; 12) anzutreiben, wobei das System ferner eine elektronische Steuereinheit (10) umfasst, wobei die elektronische Steuereinheit (10) den hybriden elektrischen Antriebsstrang (2) steuert, damit er in einem Generatormodus betrieben wird, in dem die elektrische Maschine einen Ladestrom an eine Batterie (11) abgibt, und in dem der Verbrennungsmotor (3) ein positives Antriebsdrehmoment für das Fortbewegungselement bereitstellt, wobei die elektronische Steuereinheit (10) dazu geeignet ist, das Drehmoment, das von dem Verbrennungsmotor (3) abgegeben wird, auf einen vorbestimmten Drehmomentbegrenzungswert in Abhängigkeit von der Drehzahl des Verbrennungsmotors (3) zu begrenzen, **dadurch gekennzeichnet, dass** der vorbestimmte Drehmomentbegrenzungswert ein Prozentsatz des maximalen Drehmoments des Verbrennungsmotors (3) ist, der von der Drehzahl des Verbrennungsmotors (3) abhängig ist.

10. Fahrzeug, umfassend ein Steuersystem nach Anspruch 9.

11. Fahrzeug nach Anspruch 10, **dadurch gekennzeichnet, dass** das Fahrzeug ein schweres Fahrzeug (20) und das Fortbewegungselement ein Rad (12) ist.

12. Fahrzeug nach Anspruch 10, **dadurch gekennzeichnet, dass** das Fahrzeug ein Schiff oder ein Boot (21) und das Fortbewegungselement ein Propeller (9) ist.

13. Computerprogramm, umfassend Programmcodemittel zum Bewirken, dass das System nach Anspruch 9 alle Schritte von Anspruch 1 bis 8 ausführt, wenn das Programm auf der elektronischen Steuereinheit (10) des Systems nach Anspruch 9 läuft.

14. Computerprogrammprodukt, umfassend Computerprogrammcodemittel, die auf einem computerlesbaren Medium gespeichert sind, um zu bewirken, dass das System nach Anspruch 9 alle Schritte der Ansprüche 1 bis 8 ausführt, wenn das Programmprodukt auf der elektronischen Steuereinheit des Systems nach Anspruch 9 läuft.

## Revendications

1. Procédé de commande d'une chaîne cinématique électrique hybride, comprenant un moteur à combustion interne et une machine électrique configurés en parallèle pour entraîner un élément de propulsion, comprenant les étapes suivantes consistant à :
- entraîner la chaîne cinématique en mode générateur, où la machine électrique fournit un courant de charge à une batterie et où le moteur à combustion interne fournit un couple moteur positif à l'élément de propulsion,
- limiter le couple maximal disponible du moteur à combustion interne à une valeur de limitation de couple prédéterminée en fonction de la vitesse de rotation du moteur à combustion interne,
- **caractérisé en ce que** la valeur de limitation de couple prédéterminée est un pourcentage du couple maximal du moteur à combustion interne en fonction de la vitesse de rotation du moteur à combustion interne.

2. Procédé selon la revendication 1, **caractérisé en ce que** le courant de charge de la machine électrique est diminué lorsque la demande de couple au moteur à combustion interne et le couple requis pour charger la batterie sont supérieurs à la valeur de limitation de couple prédéterminée.

3. Procédé selon la revendication 1, **caractérisé en ce que** le courant de charge de la machine électrique est diminué à zéro lorsque la demande de couple au moteur à combustion interne et le couple requis pour charger la batterie sont supérieurs à la valeur de limitation de couple prédéterminée.

4. Procédé selon la revendication 1, **caractérisé en ce que** le courant de charge de la machine électrique est diminué à zéro lorsque le couple maximal du moteur à combustion interne est demandé.

5. Procédé selon l'une quelconque des revendications 1 à 3, **caractérisé en ce que** le courant de charge de la machine électrique est augmenté lorsqu'une demande de couple en régime permanent pendant plus d'un temps prédéterminé est enregistrée.

6. Procédé selon l'une quelconque des revendications 1 à 5, **caractérisé en ce que** le pourcentage est compris entre 70 et 90% du couple maximal du moteur à combustion interne.

7. Procédé selon l'une quelconque des revendications 1 à 5, **caractérisé en ce que** la valeur de limitation de couple prédéterminée est une table en fonction de la vitesse de rotation du moteur à combustion interne.

8. Procédé selon la revendication 7, **caractérisé en ce que** la table de limitation de couple prédéterminée comprend des valeurs de limitation de couple spécifiques pour des valeurs de vitesse de rotation spécifiques du moteur à combustion interne.

9. Système de commande d'une chaîne cinématique électrique hybride (2) dans un véhicule (20; 21), dans lequel la chaîne cinématique électrique hybride (2) comprend un moteur à combustion interne (3) et une machine électrique (5) configurée en parallèle pour entraîner un élément de propulsion (9; 12), le système comprenant en outre une unité de commande électronique (10), l'unité de commande électronique (10) commandant la chaîne cinématique électrique hybride (2) pour qu'elle fonctionne en mode générateur dans lequel la machine électrique délivre un courant de charge à une batterie (11) et où le moteur à combustion interne (3) fournit un couple moteur positif à l'élément de propulsion,
dans lequel l'unité de commande électronique (10) est adaptée pour limiter le couple délivré par le moteur à combustion interne (3) à une valeur de limitation de couple prédéterminée en fonction de la vitesse de rotation du moteur à combustion interne (3), **caractérisé en ce que** la valeur de limitation de couple prédéterminée est un pourcentage du couple maximal du moteur à combustion interne (3) en fonction de la vitesse de rotation du moteur à combustion interne (3).

10. Véhicule, comprenant un système de commande selon la revendication 9.

11. Véhicule selon la revendication 10, **caractérisé en ce que** le véhicule est un véhicule lourd (20) et l'élément de propulsion est une roue (12).

12. Véhicule selon la revendication 10, **caractérisé en ce que** le véhicule est un navire ou un bateau (21), et l'élément de propulsion est une hélice (9).

13. Programme d'ordinateur comprenant des moyens de code de programme pour amener le système selon la revendication 9 à exécuter toutes les étapes selon les revendications 1 à 8, lorsque ledit programme est exécuté sur l'unité de commande électronique (10) du système selon la revendication 9.

14. Produit-programme informatique comprenant des moyens de code de programme stockés sur un support lisible par ordinateur pour amener le système selon la revendication 9 à exécuter toutes les étapes selon les revendications 1 à 8, lorsque ledit produit-programme est exécuté sur l'unité de commande électronique du système selon la revendication 9.
